# EUROPEAN PATENT APPLICATION

(11) **EP 2 905 269 A1**
(43) Date of publication of application: **12.08.2015**
(21) Application number: 15154094.5
(22) Date of filing: 06.02.2015
(51) Int. Cl.: C04B 28/02, C04B 111/60, C04B 111/62

(54) **Pourable concrete for polishable concrete floors**

(30) Priority: 06.02.2014 BE 201400073
(71) Applicant: Degroote Bernard BVBA, 8980 Zonnebeke - Passendale (BE)
(72) Inventor: Degroote, Bernard, 8980 Zonnebeke-Passendale (BE)
(74) Representative: Chielens, Kristof

(57) **Abstract**

The present invention relates to a pourable concrete mortar suitable for forming a polishable concrete floor, comprising cement, sand, limestone and water, in which said sand is river sand and in that at most 6 weight% of this river sand has a particle size of less than 250 micrometers (µm). By using such a concrete mortar, the undesired effect of delamination is prevented.

## Description

The present invention relates, on the one hand, to a pourable concrete mortar suitable for producing a polishable concrete floor. On the other hand, the present invention relates to a method for producing such a concrete mortar.

Over the past few years, contractors for concrete floors are increasingly often confronted with the undesired occurrence of delamination with polished concrete floors. This phenomenon involves the separation of a thin layer having a thickness of 3 to 10 mm, in exceptional cases 30 mm, from the concrete surface. This delamination may occur either immediately after finishing or a few days or months after the floor has been in use. The delaminated surface may be a few square centimetres to a few square metres in size. Delamination becomes visible when the surface of the cured concrete starts to show signs of damage during circulation.

It is suspected that delamination in polished concrete floors is caused by the fact that water (originating from the concrete) and air bubbles migrate to the surface during polishing - due to the action of the propeller blades of the polishing machine - and become trapped there underneath the surface layer which has (meanwhile) been compacted. This creates weaker zones where the surface layer may become detached on account of the polishing, the use thereof or the shrinkage of the concrete.

Chinese patent publication CN 101 786 850 describes a cement-based self-levelling mortar, the preparation method and the application thereof. The respective mortar comprises the following components: 31 - 40 % by weight of cement, 13 - 15 % by weight of plaster, 5 - 15 % by weight of calcium, 50 - 70 % by weight of sand and additives. The sand which is used may be either quartz, river sand or industrial residue.

European patent publication EP 1 452 503 describes the composition of a self-levelling mortar which comprises the following components per cubic metre (m³): 320 kg of Portland cement, 400 kg of calcium, 1352 kg of sand (0 - 2 mm or 0 - 4 mm) and gravel (2 - 8 mm or 4 - 8 mm) and additives.

It is now an object of the present invention to provide a pourable concrete mortar for producing polishable concrete floors, which concrete mortar will greatly reduce the risk of delamination of the polished concrete surface and even prevent it.

The object of the invention is achieved by providing a pourable concrete mortar suitable for producing a polishable concrete floor, comprising cement, sand, limestone and water, in which said sand is river sand and this river sand has a particle size of less than 250 micrometre (µm) of at most 6 % by weight.

In order to determine the particle size (or grain size) of the river sand, it is possible to use the known technique of sieve analysis. The type of river sand which is used in the context of the present invention is preferably a round quartz sand 0/8 having the following specific characteristics: chloride content < 0,02 % (m/m), shell content < 0,5 % (m/m) and no presence of organic constituents. By comparison, a round sea sand 0/4 has a chloride content of < 0,045 %, shell content of < 17% and it still contains organic constituents.

Using river sand, which is a coarser type of sand than the sea sand which has been used until now in such concrete compositions, results in a concrete mortar which is less viscous than the concrete mortars used until now for producing polishable concrete floors. By using a less viscous concrete mortar, air bubbles and water can escape, as it were, before the surface becomes compacted. As a result thereof, the water and the air bubbles are no longer trapped underneath the concrete surface and it will no longer be possible for delamination to occur.

In a preferred embodiment of the concrete mortar according to the invention, the concrete mortar contains at least 309 kg/m³, preferably at least 320 kg/m³ cement. Such a composition is particularly suitable for internal use. The amount of cement in the concrete mortar depends on the application, and is preferably between 309 kg/m³ and 393 kg/m³.

In a more preferred embodiment of the concrete mortar according to the invention, the water (w)/cement (c) factor without absorption of said concrete mortar at most 0.52. In particular, the water (w)/cement (c) factor with absorption of said concrete mortar is at most 0.49.

In an alternative embodiment of the concrete mortar according to the invention, the concrete mortar comprises at least 370 kg/m³, preferably at least 380 kg/m³ of cement. Such a composition is particularly suitable for external use. With such a concrete mortar, the water (w)/cement (c) factor without absorption of said concrete mortar is at most 0.44 and the water (w)/cement (c) factor with absorption of said concrete mortar is at most 0.41.

According to a particular embodiment of the concrete mortar according to the invention, the concrete mortar contains at least 660 kg/m³, preferably at least 697 kg/m³ of river sand. These amounts are particularly suitable for internal use. For external use, approximately 708 kg/m³ of river sand will be added. The amount of river sand in the concrete mortar depends on the application and is preferably between 660 kg/m³ and 744 kg/m³.

Another subject-matter of the present invention relates to a method for making a pourable concrete mortar suitable for producing a polishable concrete floor, wherein at least cement, water, limestone and river sand which has a particle size of less than 250 micrometres (µm) of at most 6 % by weight are mixed to form a homogenous concrete mortar. By only using such river sand, a mortar is obtained which is less viscous (compared to the known mortars for such applications), as a result of which the risk of delamination of floor which is produced thereby is greatly reduced or even eliminated. Obviously, other known aggregate and additives may also be added during manufacture of the mortar.

The invention will be explained below by means of the following description and a number of detailed examples. These examples should be regarded as serving to illustrate the invention and should not be regarded as limiting the scope of protection of the invention.

As standard, concrete mortars suitable for producing polishable concrete floors are only made using fine sea sand. However, in combination with PCE (polycarboxylate) superplast, this fine sea sand forms sticky concrete. Sticky concrete has the drawback that the mixing water will migrate to the surface much more slowly in order to prevent premature desiccation of the concrete surface. This phenomenon of water separation is known as bleeding within the concrete industry. The bleeding water is reabsorbed by the concrete after some time, as a result of which it is always moist at the surface so as to incorporate the quartz layer during polishing. This quartz layer is likewise a dry substance and requires a certain percentage of water to be able to hydrate and bond to the concrete situated underneath. However, since the introduction of the more stringent (BENOR) standard, which emphasize the fact that the water/cement (w/c) factor should be kept low, in order thus to produce 'concrete by resistance' having a low shrinkage due to the low water content, a maximum water content was imposed on the concrete composition. As a result, it is no longer possible to add water in order to ensure good bonding. In order to solve this and to still keep the concrete mortar pumpable and processable, a so-called superplasticiser on the basis of polycarboxylates (PCE) is added. Such a PCE superplast provides a steric hindrance between the cement particles and has a delaying effect on the concrete. This, together with the insufficient amount of water in relation to the content of fine material leads to the undesirable phenomenon of crustation. Crustation is characterized by the absence of separation water on an already cured concrete surface, while the concrete situated underneath is still mouldable. In practice, this has the result that as soon as the concrete polishers notice that the concrete surface is drying out, they have to start the infilling procedure for the quartz material in order to still be able to incorporate this into concrete and to achieve the desired flatness. However, as a result, the polishers are confronted with the so-called mattress effect, in which the fine material and the separation water migrate to the concrete surface due to the vibrations of the polishing machines, while they are already compacting the top layer. These fine particles and water collect below the (compacted) top layer, resulting in the above-described delamination effect.

In order to prevent this, the patent proprietor has developed a new concrete composition, specifically suitable for producing polishable floors. This development is the result of their own experiences, through which they reached the conclusion that the two most important aspects which promote delamination are the following:
- insufficient water content for the quantity of fine sand types;
- excessive quantity of PCE superplasts, which is in itself necessary to ensure good processability of the concrete and compensate for the shortage of water.

On the basis of these findings, they developed their own concrete mortar, which uses a specific coarse type of sand with a perfect grain curve, tuned to the cement content and the other granulates (limestone) in the concrete mortar. More specifically, river sand having a particle size of less than 250 micrometre (µm) of at most 6 % by weight is used. For comparison, the current concrete compositions for producing polishable concrete floors are made using fine sea sands which have passing fraction at 250 µ of 15 to 20 % by weight.
By adjusting the concrete composition in this respect, a coarser mortar was achieved, so that the amount of superplast and other granulates (limestone) also had to be adjusted. Tests have now shown that the concrete mortar according to the invention requires 15 litres of water per cubic meter of concrete less than would be the case when using sea sand. In this way, and as will become clear from the following exemplary embodiments, a concrete is obtained with contains more free water and a lower w/c factor than the concrete mortar which was known until now. In addition, no superplasticiser is now used in the concrete mortar which is specifically suitable for interior use during mixing of the concrete in the concrete mixing plant.

### Example 1

In order to form a concrete floor in a covered space which is subsequently to be polished, 1m³ of pumpable polishing concrete was prepared. The requirements (BENOR) for the concrete were as follows: strength class: C25/30; environmental class: EE2; consistency class: S3. Additional requirement: pumping concrete, polishing concrete, min. compressive strength of cube of 33 N/mm² instead of 30 N/mm², min. 320 kg of cement, reinforced concrete.

To this end, the following amounts of raw material were used per cubic metre of concrete mortar. In this case, the lower limit and upper limit for the amounts of raw materials which may be added are also given in each case. In this example, no plasticising additives (plasticiser or superplasticiser) were added.
- 157 kg (152.29 kg - 161.71 kg) of CEM III/A 42.5 N LA
- 162 kg (157.14 kg -166.86 kg) of CEM I 52.5 R HES
   → Instead of adding a combination of two cement types (and in all kinds of possible ratios), it is also possible to opt for either 100% CEM III/A 42.5 N LA or 100% CEM I 52.5 R HES
- 30 kg (29.10 kg - 30.90 kg) of fly ash
- 697 kg (662.15 kg - 717.91 kg) of river sand 0/4
- 233 kg (226.01 kg - 239.99 kg) of limestone 2/6,3
- 934 kg (905.98 kg - 962.02 kg) of limestone 6/20
- 169 litres (163.93 l - 169 l) of water (effective)

Concrete sieve residue (lower limit):

| | |
|---|---|
| 0.063 | 100% |
| 0.125 | 99% |
| 0.25 | 97% |
| 0.5 | 84% |
| 1 | 74% |
| 2 | 68% |
| 4 | 57% |
| 5.6 | 53% |
| 6.3 | 50% |
| 8 | 44% |
| 10 | 35% |
| 11.2 | 30% |
| 12.5 | 25% |
| 14 | 20% |
| 16 | 12% |
| 20 | 3% |
| 22,4 | 1% |
| 33.5 | 0% |
| 40 | 0% |
| 45 | 0% |

The raw materials were accurately weighed by means of suitable installations and mixed to form a homogenous concrete mortar. The resulting mortar had the following specifications:
- 2,384 kg (2,312.48 kg - 2,455.52 kg) volume mass
- 0.52 (0.5 - 0.52) w/c factor without absorption
- 0.49 (0.47 - 0.49) w/c factor met absorption
- Max. alkali content 1.88 kg
- Chloride content 0.14 % compared to cement
- 139 litres (401 kg) (134.83l (388.97 kg) - 139l (401 kg) of fine particles
- Theoretical volume 1,000 litres (970 l - 1,030 l)

### Example 2

In order to form a concrete floor which is subsequently to be polished, 1m³ of pumpable polishing concrete was prepared. The requirements (BENOR) for the concrete were as follows: strength class: C30/37; environmental class: EE3; consistency class: S3. Additional requirement: pumping concrete, polishing concrete, min. compressive strength of cube of 40 N/mm² instead of 37 N/mm², min. 350 kg of cement, reinforced concrete.

To this end, the following amounts of raw material were used per cubic metre of concrete mortar. In this case, the lower limit and upper limit for the amounts of raw materials which may be added are also given in each case. In this example, no plasticising additives (plasticiser or superplasticiser) were added.
- 173 kg (167.81 kg - 178.19 kg) of CEM III/A 42.5 N LA
- 178 kg (172.66 kg - 183.34 kg) of CEM 152,5 R HES
   → Instead of adding a combination of two cement types (and in all kinds of possible ratios), it is also possible to opt for either 100% CEM III/A 42.5 N LA or 100% CEM I 52.5 R HES
- 0 kg fly ash
- 718 kg (682.10 kg - 753.9 kg) of river sand 0/4
- 231 kg (219.45 kg - 242.55 kg) of limestone 2/6.3
- 923 kg (876,85 kg - 969.15 kg) of limestone 6/20
- 169 litres (163.93 l - 169 l) of water (effective)

Concrete sieve residue (lower limit):

| | |
|---|---|
| 0.063 | 100% |
| 0.125 | 99% |
| 0.25 | 97% |
| 0.5 | 84% |
| 1 | 73% |
| 2 | 67% |
| 4 | 56% |
| 5.6 | 52% |
| 6.3 | 49% |
| 8 | 43% |
| 10 | 35% |
| 11.2 | 30% |
| 12.5 | 25% |
| 14 | 20% |
| 16 | 12% |
| 20 | 2% |
| 22.4 | 0% |
| 33.5 | 0% |
| 40 | 0% |
| 45 | 0% |

The raw materials were accurately weighed by means of suitable installations and mixed to form a homogenous concrete mortar. The resulting mortar had the following specifications:
- 2,393 kg (2,321.21 kg - 2,464.79 kg) volume mass
- 0.48 (0.46 - 0.48) w/c factor without absorption
- 0.45 (0.43 - 0.45) w/c factor with absorption
- Max. alkali content 2.06 kg
- Chloride content 0.13 % compared to cement
- 137 litre (404 kg) (132.89 l (391.88 kg) - 137 l (404 kg) fine particles
- Theoretical volume 1,000 litres (970 l - 1.030 l)

### Example 3

In order to form a concrete floor which is subsequently to be polished, 1m³ of pumpable polishing concrete was prepared. The requirements (BENOR) for the concrete were as follows: strength class: C35/45; environmental class: EE4; consistency class: S3. Additional requirement: pumping concrete, polishing concrete, min. compressive strength of cube of 48 N/mm² instead of 45 N/mm², min. 380 kg of cement, reinforced concrete.

To this end, the following amounts of raw material were used per cubic metre of concrete mortar. In this case, the lower limit and upper limit for the amounts of raw materials which may be added are also given in each case.
- 188 kg (182.36 kg - 193.64 kg) of CEM III/A 42.5 N LA
- 193 kg (187.21 kg -198.79 kg) of CEM I 52.5 R HES
   → Instead of adding a combination of two cement types (and in all kinds of possible ratios), it is also possible to opt for either 100% CEM III/A 42.5 N LA or 100% CEM I 52.5 R HES.
- 0 kg of fly ash
- 708 kg (672.60 kg - 743.4 kg) of river sand 0/4
- 227 kg (215.65 kg - 238.35 kg) of limestone 2/6.3
- 910 kg (864.5 kg - 955.5 kg) of limestone 6/20
- 169 litres (163.93 l- 169 l) of water (effective)
- 1.2 kg of superplast

Concrete sieve residue (lower limit):

| | |
|---|---|
| 0.063 | 100% |
| 0.125 | 99% |
| 0.25 | 97% |
| 0.5 | 84% |
| 1 | 73% |
| 2 | 67% |
| 4 | 56% |
| 5.6 | 52% |
| 6.3 | 49% |
| 8 | 43% |
| 10 | 35% |
| 11.2 | 30% |
| 12.5 | 25% |
| 14 | 20% |
| 16 | 12% |
| 20 | 2% |
| 22.4 | 0% |
| 33.5 | 0% |
| 40 | 0% |
| 45 | 0% |

The raw materials were accurately weighed by means of suitable installations and mixed to form a homogenous concrete mortar. The resulting mortar had the following specifications:
- 2,397 kg (2,325.09 kg - 2,468.91 kg) volume mass
- 0.44 (0.42 - 0.44) w/c factor without absorption
- 0.41 (0.39 - 0.41) w/c factor with absorption
- Max. alkali content 2,21 kg
- Chloride content 0.13 % compared to cement
- 147 litres (433 kg) (142.59 l (420.01 kg) - 147 l (433 kg) of fine particles
- Theoretical volume 1,000 litres (970 l - 1,030 l)

If we now compare the concrete mortar according to the invention to the standard (BENOR) concrete mortar, then a number of clear differences become apparent.
1) Lower water requirement + less water to be added
   With each concrete composition, the w/c factor both with and without absorption is lower with the concrete mortar according to the invention than with the current standard BENOR concrete. This results in a reduction in shrinkage and an improved durability of the concrete. In addition, less water will evaporate at the concrete surface, as a result of which the pore structure will be much denser here: (with current BENOR standard value w/c factor without absorption)
   - 0.52 with C25/30 EE2 according to invention, compared to 0.55 with standard C25/30 EE2 BENOR;
   - 0.48 with C30/37 EE3 according to invention, compared to 0.50 with standard C30/37 EE3 BENOR;
   - 0.44 with C35/45 EE4 according to invention, compared to 0.45 with standard C35/45 EE4 BENOR.
2) No addition or reduced addition of plasticiser(s) (depending on concrete type) PCE superplast in combination with a large volume of fine material results in a viscous concrete mortar. As a result thereof, water and undesired air (bubbles) migrate to the surface of the concrete more slowly. This, in combination with less free water (with standard concrete, the raw materials have a greater water requirement), leads to drying out of the concrete surface. In addition, there is a risk that the bleeding water (as it rises more slowly in the sticky concrete mass) and the formed air bubbles which are still rising while the surface is already being treated (compacted). The vibrations of the polishing machines cause these two elements to move in the concrete mass.
3) Inert skeleton - grain distribution
   With the concrete mortar according to the present invention, it is much more constant compared to the standard BENOR concrete. This leads to an improved cement matrix, as a result of which the concrete will be much more compact. This will immediately result in reduced shrinkage and improved durability. In addition, the less fine, the more limited the porous mortar layer at the surface. Shrinkage is important both for internal floors and external floors, while the reduced porosity is an additional positive feature for the sensitivity to the action of frost and thaw of the external floors.
4) Chloride content
   This is significantly lower with the concrete mortar according to the invention than with standard BENOR concrete. As a result thereof, the risk of corrosion of the reinforcement initiated by chloride is reduced.
5) ASR
   With the mortar according to the invention, the maximum alkali content is lower than with standard BENOR concrete mortar. Consequently, this limits the risk of an ASR reaction between cement and granulates, resulting in a more durable concrete.

The floors (surface area between 1,200 and 1,800 m²) which were poured using the concrete mixtures described in Examples 1 to 3 were polished. A panel comprising two polishers and a concrete specialist visually inspected the various cast floors one month after the work had been completed and concluded that there had been no delamination at all on any of the surfaces. The surface itself was also found to be much more wear-resistant than a concrete floor made using sea sand, as a thicker quartz wearing layer was incorporated. Also during concreting, the concrete expert noticed that the concrete was much leaner (less viscous) compared to a standard concrete. After concreting (and before polishing), the mixing water which was contained inside came to the surface in a controlled manner in order to keep it moist, in other words, the concrete surface was sufficiently moist to be able to hydrate the cement in the quartz. After the mixing lists and the concrete were checked, it was found that 15 to 18 litres of water less per m3 of concrete were added than with a standard polishing concrete.

The same panel arrived at the following findings during work which had been carried out previously and which used finer sand instead of river sand. More specifically, a concrete floor of approximately 1,800 m² was poured which had the following concrete composition per m³: C25/30, 340 kg of cement, S4, but using sea sand 0/4. According to the technical data sheet, this sea sand had a passing fraction of +/- 15 % by weight on a 250 µ sieve. These types of fine sand retain water much longer in the mixture, resulting in delayed bleeding. After pouring, the surface was filled in with quartz and provided with a curing compound. A few days after the concrete had been poured, delamination damage occurred. The wear-resistance of the top layer was not optimal since insufficient quartz could be filled in. The top layer dried out more quickly than the base course concrete, requiring us to start polishing prematurely to ensure that the top layer was still sufficiently moist to be able to fill it in with the quartz and to achieve a floor having the desired flatness. During polishing, the polishers noticed that the base course concrete had not sufficiently cured and they found themselves polishing on a "mattress", as it were. Due to the vibrations of the machines, the fine matter of the concrete (unbound cement, fine sand,...) was forced upwards, together with the unbound water (around the sand grains) and this collected below the quartz which has already been partially filled in, resulting in a hollow sound when knocking on the floor after finishing.
Due to the composition of the concrete (excess of cement and fine sea sand, the water in the concrete could not move sufficiently quickly to the surface (to keep the top layer moist = bleeding), as a result of which this started to dry out (atmospheric humidity). Also, the effective water content was too low in view of the fact that fine sand requires a large amount of water.
So that the concrete mixing plant could nevertheless maintain a certain degree of fluidity, the shortage of water was compensated for by adding superplast. In this case, the addition of superplast in combination with fine sand resulted in tacky concrete. Tacky concrete releases air and water more slowly, as moisture transmission in such concrete is very difficult.

The above tests and findings clearly show that using coarser river sand having a particle size of less than 250 micrometres (µm) of at most 6 % by weight instead of finer types of sand will prevent the occurrence of delamination. The type of sand (and its water demand) in a mixture determine the quantity of cement (water/cement factor) and the quantity of superplast (to compensate for any water shortage). These two factors ultimately determine the binding speed and the degree of hydration.

## Claims

1. Pourable concrete mortar suitable for producing a polishable concrete floor, comprising cement, sand, limestone and water, **characterized in that** said sand is river sand, and **in that** said river sand has a particle size of less than 250 micrometres (µm) of at most 6 % by weight.

2. Pourable concrete mortar according to Claim 1, **characterized in that** the concrete mortar contains at least 309 kg/m³ of cement.

3. Pourable concrete mortar according to Claim 1 or 2, **characterized in that** the water (w)/cement (c) factor without absorption of said concrete mortar is at most 0.52.

4. Pourable concrete mortar according to any of the preceding claims, **characterized in that** the concrete mortar contains at least 370 kg/m³ of cement.

5. Pourable concrete mortar according to Claim 4, **characterized in that** the water (w)/cement (c) factor without absorption of said concrete mortar is at most 0.44.

6. Pourable concrete mortar according to any of the preceding claims, **characterized in that** the concrete mortar contains at least 660 kg/m³ of river sand.

7. Method for producing a pourable concrete mortar suitable for forming a polishable concrete floor, **characterized in that** at least cement, water, limestone and river sand having a particle size of less than 250 micrometres (µm) of at most 6 % by weight are mixed to form a homogenous concrete mortar.
